# EUROPEAN PATENT APPLICATION

(11) **EP 2 647 938 A1**
(43) Date of publication of application: **09.10.2013**
(21) Application number: 13171594.8
(22) Date of filing: 03.12.2010
(51) Int. Cl.: F28B 9/06, F28C 1/14, F01K 9/00, F28B 5/00

(54) **Cooling system with a condensate polishing unit**

(30) Priority: 03.12.2009 HU P0900750
(62) Divisional of application: 10809328.7
(71) Applicant: GEA EGI Energiagazdálkodási ZRT., 1117 Budapest (HU)
(72) Inventor: Szabó, Zoltán, H-1014 Budapest (HU); Ludvig, László, H-1221 Budapest (HU); Balogh, András, H-1194 Budapest (HU)
(74) Representative: Kereszty, Marcell

(57) **Abstract**

The invention is a cooling system for condensing exhaust steam of a steam turbine (10), the cooling system comprising a dry cooling circuit (11) and a dry air-cooled unit (12) for effecting heat dissipation of the cooling water flowing in the dry cooling circuit (11), wherein the dry cooling circuit (11) is connected to a condenser. The cooling system also comprises a condensate supply line (19) to enable a feeding of a condensate polishing unit (18) at least partly with the cooling water coming from the dry air-cooled unit (12) if the condensate collected in the condenser has a higher temperature than a predetermined limit temperature.

## Description

### TECHNICAL FIELD

The present invention relates to water-saving cooling systems for use in power plants and in other industrial cyclical processes, which apply a condensate polishing unit.

### BACKGROUND ART

In prior art, the most widely used power plant and industrial cooling system is the so-called wet cooling system, in which the cooling water is allowed to evaporate freely to the environment.

There are also known certain wet-dry cooling system combinations, i.e. hybrid cooling systems, which are designed to combine the positive features of the wet and the dry cooling systems. A hybrid cooling system is disclosed e.g. in US 4,296,802.

In the case of conventional surface condensers used in such cooling systems, in summer when the mixture of condensate and cooling water collected in the bottom of the condenser may be at a temperature of higher than 60 °C, a mixed bed condensate polishing unit 18 usually applied in the feedwater circuit of a power plant must be disconnected, due to the temperature tolerance limit of the resin charge therein. There are known solutions to address this problem. US 2009/0266076 A1, JP 7 015322 B and JP 2005 171820 disclose temperature based control systems for preventing damage to the condensate polishing unit arranged downstream of the condenser. In these known systems, however, over-temperature is avoided by means of additional heat exchangers, so these known systems are rather complicated and expensive.

### DESCRIPTION OF THE INVENTION

The object of our invention is to provide a cooling system which is exempt from the disadvantages of prior art solutions. The object of the invention is especially to create a cooling system, which provides an effective and simple protection for the condensate polishing unit.

Accordingly, the invention is a cooling system defined in claim 1. Preferred embodiments of the invention are defined in the dependent claims.

### BRIEF DESCRIPTION OF THE DRAWINGS

Exemplary preferred embodiments of the invention will be described hereunder with reference to drawings, where
Fig. 1 is a schematic diagram of a prior art hybrid cooling system, and
Fig. 2 is a schematic diagram of a hybrid cooling system according to the invention.

### MODES OF IMPLEMENTATION OF THE INVENTION

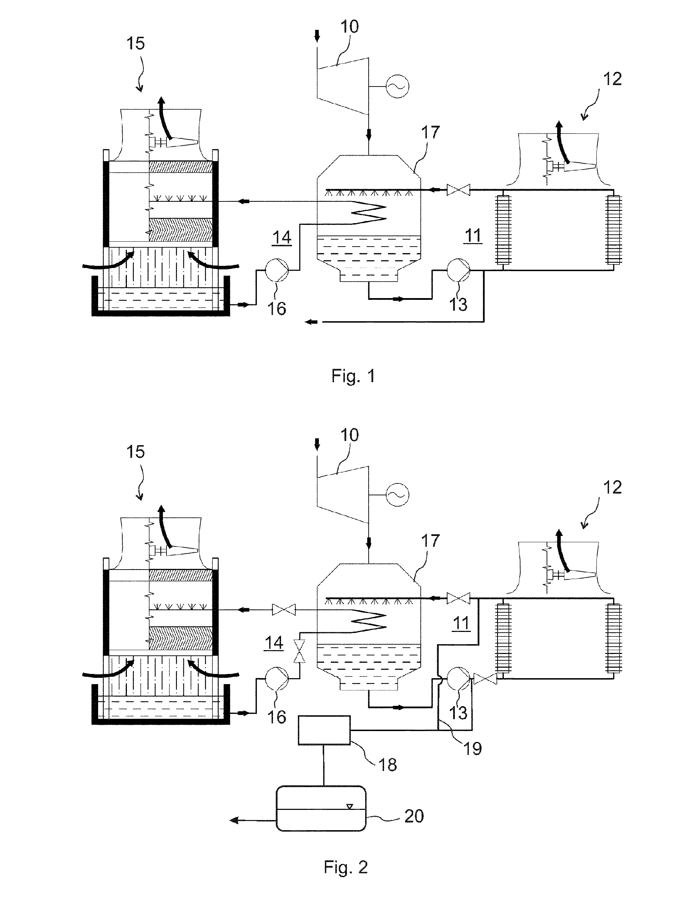

In Fig. 1 the schematic diagram of a prior art hybrid cooling system. This hybrid cooling system serves for condensing the exhaust steam of a steam turbine 10, and it comprises a dry cooling circuit 11 and a dry air-cooled unit 12 for effecting heat dissipation of the cooling water flowing in the dry cooling circuit 11, as well as a wet cooling circuit 14 and a wet cooled unit 15 for effecting heat dissipation of the cooling water circulated in the wet cooling circuit 14. The dry air-cooled unit 12 is preferably a dry cooling tower as shown in the figure, and the wet cooled unit 15 is preferably a wet cooling tower. In the dry cooling circuit 11, a cooling water pump 13, and in the wet cooling circuit 14 a cooling water pump 16 is used for circulation. According to the invention, the cooling water circulating in the dry cooling circuit 11 is separated from the cooling water flowing in the wet cooling circuit 14, i.e. the cooling water of the two cooling circuits 11 and 14 do not mix, and the dry and wet cooling circuits are connected to a common condenser.

The common condenser for the two cooling circuits 11 and 14 can be, for example, a surface condenser which comprises a surface condenser part for each of the two cooling circuits 11 and 14. This may be preferred primarily in the cooling of nuclear power plants, where for safety reasons it is necessary to limit the extension of the turbine circuit (i.e. that the turbine circuit should not extend beyond the building part which serves for housing the conventional surface condensers). However, the figure shows a hybrid condenser 17 comprising a direct contact condenser part connected to the dry cooling circuit 11 and a surface condenser part connected to the wet cooling circuit 14. In the hybrid condenser 17, the mixing condenser part and the surface condenser part are located preferably in an arbitrary sequence one after the other in the direction of the flowing steam or side by side. The sequential arrangement is more advantageous due to the uniformity of pressure relations in the steam condenser shell than the side by side arrangement.

Consequently, the exhaust steam coming from the steam turbine 10 is condensed by the hybrid condenser 17 consisting of a surface condenser part and a direct contact condenser part. On the cooling water cooled tubes of the surface condenser part, some of the exhaust steam is condensed, and the condensate is collected at the bottom of the hybrid condenser 17. The water cooling the tubes of the surface condenser part is now supplied to the wet cooling tower, where it is cooled partly by evaporation, and then by pumping it is returned to the tubes of the surface condenser part. The condensate of the steam condensed in the direct contact condenser part is collected in the bottom of the hybrid condenser 17 together with the condensate generated in the wet part. From here, the proportion corresponding to the water flow of the dry tower is forwarded by the cooling water pump 13 to the dry cooling tower, while a smaller part is returned as boiler (not shown) feedwater for generating the working steam of the steam turbine 10.

In the case of conventional surface condensers, in summer when the mixture of condensate and cooling water collected in the bottom of the condenser may be at a temperature of higher than 60 °C, a mixed bed condensate polishing unit 18 shown in Fig. 2 and usually applied in the feedwater circuit of a power plant must be disconnected, due to the temperature tolerance limit of the resin charge therein. Even if condenser polishing units of a type different from the mixed bed one are applied, with resins which do not completely deteriorate by the mentioned 60 °C condensate temperature, their ion exchanging efficiency reduces and their life-span measurably decreases due to operation at elevated condensate temperatures. However, in the cooling system according to the invention, a water of condense purity is circulated in the direct contact condenser of the dry cooling circuit, therefore the water in summer may even be taken from the flow of the cold return cooling water of the dry cooling circuit 11, and hence the continuous operation of the condensate polishing unit 18 can be maintained.

Therefore, in the manner shown in Fig. 2, the invention preferably comprises a condensate polishing unit 18, as well as a condensate supply line 19 which enables feeding the condensate polishing unit 18 at least partly with cooling water exiting from the dry air-cooled unit 12, in the case when the temperature of the condensate collected in the condenser is higher than a predetermined limit temperature.

From the condensate polishing unit 18, the water leaves to a de-aerating vessel 20 and from there to the feedwater circuit of the boiler. The de-aerating vessel 20 has a buffer capacity, and hence the boiler is not even left without feedwater between the alternative condensate removals under condensate temperatures of for example below or above 60 °C, at the time of automated (temperature controlled) switch-over. The switch-over means that a removal branch is gradually shut off and the other removal branch is gradually opened, but of course any preferred mixing method can also be applied. By means of the valves shown in the figure, individual sections of the hybrid condenser 17 can be segregated and separately serviced.

The invention, of course, is not limited to the above detailed preferred embodiments, but further modifications, variations and further developments are possible within the scope defined by the claims.

## Claims

1. A cooling system for condensing exhaust steam of a steam turbine (10), the cooling system comprising a dry cooling circuit (11) and a dry air-cooled unit (12) for effecting heat dissipation of the cooling water flowing in the dry cooling circuit (11),
wherein the dry cooling circuit (11) is connected to a condenser.
**characterised by**
comprising a condensate supply line (19) to enable a feeding of a condensate polishing unit (18) at least partly with the cooling water coming from the dry air-cooled unit (12) if the condensate collected in the condenser has a higher temperature than a predetermined limit temperature.

2. The cooling system according to claim 1, **characterised by** being a hybrid cooling system further comprising a wet cooling circuit (14) and a wet cooled unit (15) for effecting heat dissipation of the cooling water flowing in the wet cooling circuit (14),
wherein the cooling water flowing in the dry cooling circuit (11) is separated from the cooling water flowing in the wet cooling circuit (14), and the dry and wet cooling circuits (11, 14) are connected to a common condenser.

3. The cooling system according to claim 2, **characterised in that** the condenser is a hybrid condenser (17), which comprises a direct contact condenser part associated with the dry cooling circuit (11) and a surface condenser part associated with the wet cooling circuit (14).
